Europäisches Patentamt

European Patent Office

Office européen des brevets

(19)

(11) EP 1 282 270 A1

(12) **EUROPEAN PATENT APPLICATION**

(43) Date of publication:
05.02.2003 Bulletin 2003/06

(51) Int Cl.7: **H04L 12/26**, H04L 12/24

(21) Application number: 02255296.2

(22) Date of filing: 30.07.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **31.07.2001 US 919149**

(71) Applicant: **Hewlett-Packard Company
Palo Alto, CA 94304 (US)**

(72) Inventor: **Rhodes, N. Lee
Los Altos, CA 94024 (US)**

(74) Representative: **Tollett, Ian et al
Williams Powell
4 St. Paul's Churchyard
London EC4M 8AY (GB)**

(54) **Network usage analysis method and system using dynamic statistical data distribution**

(57)    A network usage analysis system and method (20) having a dynamic statistical data distribution system (320) and method. In one embodiment, the present invention provides a method for substantially real-time analyzing of a stream of data (324). The method includes receiving the stream of data (324). A data distribution is determined (300) representative of the stream of data, including creating data bins (306) having exponentially increasing sizes (312), and allocating a statistical representation of the data in the data bins. The data distribution (300) is used to analyze the stream of data.

Fig. 3

EP 1 282 270 A1

**Description**

This patent application is related to the following Non-Provisional U.S. Patent Applications: Serial Number 09/548,124, entitled "Internet Usage Analysis System and Method"; Serial Number 09/919,527, entitled "Network Usage Analysis System and Method for Updating Statistical Models"; Serial Number 09/919,148, entitled "Network Usage Analysis System and Method for Determining Excess Usage". All these applications are filed in the same name as the present application, and are all herein incorporated by reference.

The present invention relates to a network usage analysis system and method, and more particularly, to a network usage analysis system having a dynamic statistical data distribution system and method.

Network systems are utilized as communication links for everyday personal and business purposes. With the growth of network systems, particularly the Internet, and the advancement of computer hardware and software technology, network use ranges from simple communication exchanges such as electronic mail to more complex and data intensive communication sessions such as web browsing, electronic commerce, and numerous other electronic network services such as Internet voice, and Internet video-on-demand.

Network usage information does not include the actual information exchanged in a communications session between parties, but rather includes metadata (data about data) information about the communication sessions and consists of numerous usage detail records (UDRs). The types of metadata included in each UDR will vary by the type of service and network involved, but will often contain detailed pertinent information about a particular event or communications session between parties such as the session start time and stop time, source or originator of the session, destination of the session, responsible party for accounting purposes, type of data transferred, amount of data transferred, quality of service delivered, etc. In telephony networks, the UDRs that make up the usage information are referred to as a call detail records or CDRs. In Internet networks, usage detail records do not yet have a standardized name, but in this application they will be referred to as internet detail records or IDRs. Although the term IDR is specifically used throughout this application in an Internet example context, the term IDR is defined to represent a UDR of any network.

Network usage information is useful for many important business functions such as subscriber billing, marketing & customer care, and operations management. Network usage data mediation systems are utilized for collecting, correlating, and aggregating network usage information as it occurs and creating UDRs as output that can be consumed by computer business systems that support the above business functions. Examples of these computer business systems include billing systems, marketing and customer relationship management systems, customer churn analysis systems, and data mining systems.

Especially for Internet networks, several important technological changes are key drivers in creating increasing demand for timely and cost-effective analysis of Internet usage information or the underlying IDRs.

One technological change is the dramatically increasing Internet access bandwidth at moderate subscriber cost. Most consumers today have only limited access bandwidth to the Internet via an analog telephony modem, which has a practical data transfer rate upper limit of about 56 thousand bits per second. When a network service provider's subscribers are limited to these slow rates there is an effective upper bound to potential congestion and overloading of the service provider's network. However, the increasing wide scale deployments of broadband Internet access through digital cable modems, digital subscriber line, microwave, and satellite services are increasing the Internet access bandwidth by several orders of magnitude. As such, this higher access bandwidth significantly increases the potential for network congestion and bandwidth abuse by heavy users. With this much higher bandwidth available, the usage difference between a heavy user and light user can be quite large, which makes a fixed-price, all-you-can-use pricing plan difficult to sustain; if the service provider charges too much for the service, the light users will be subsidizing the heavy users; if the service provider charges too little, the heavy users will abuse the available network bandwidth, which will be costly for the service provider.

Another technological change is the rapid growth of applications and services that require high bandwidth. Examples include Internet telephony, video-on-demand, and complex multiplayer multimedia games. These types of services increase the duration of time that a user is connected to the network as well as requiring significantly more bandwidth to be supplied by the service provider.

Another technological change is the transition of the Internet from "best effort" to "mission critical". As many businesses are moving to the Internet, they are increasingly relying on this medium for their daily success. This transitions the Internet from a casual, best-effort delivery service into the mainstream of commerce. Business managers will need to have quality of service guarantees from their service provider and will be willing to pay for these higher quality services.

Due to the above driving forces, Internet service providers are moving from current, fixed-rate, all-you-can-use Internet access billing plans to more complex billing plans that charge by metrics, such as volume of data transferred, bandwidth utilized, service used, time-of-day, and subscriber class, which defines a similar group of subscribers by their usage profile, organizational affiliation, or other attributes.

An example of such a rate structure might include a fixed monthly rate portion, a usage allocation to be included as part of the fixed monthly rate (a threshold), plus a variable rate portion for usage beyond the allocation (or threshold). For a given service provider there will be many such rate structures for the many possible combinations of services and subscriber classes.

Network usage analysis systems provide information about how the service provider's services are being used and by whom. This is vital business information that a service provider must have in order to identify fast moving trends, establish competitive prices, and define new services or subscriber classes as needed. Due to the rapid pace that new Internet services are appearing, the service provider must have quick access to this vital information. Known analysis packages feed the network usage data into large databases, and then perform subsequent analysis on the data at a later time. These database systems can get quite large. A service provider with one million subscribers can generate tens of gigabytes of usage data every day. Although the technology for storing vast amounts of data has been steadily improving, Internet traffic is growing at a much faster pace. Storing and managing all of this data is expensive and may eventually become prohibitive. Large and expensive supporting hardware is required (e.g., terabyte disk storage, back-up systems) and expensive relational database management software systems (RDBMS) are required to support very high transaction rates and large data sets. Further, database administrative personnel must be employed to support and maintain these large database management systems.

Once the type of analysis is determined, data mining and analysis software systems are utilized to query and analyze the large amounts of network usage information stored in the databases. The use of data mining and analysis software systems often requires additional business analysis consulting services, additional support hardware, and data mining software licenses. Further, given the amount of data that needs to be processed, the total latency or time aging of the data can be quite long. It may take days to weeks to extract the needed information.

One type of analysis disclosed in United States Patent Application Serial No. 09/548,124, filed April 12, 2000, entitled "Internet Usage Analysis System and Method," utilizes statistical models for analyzing network usage data. Since the raw network usage data is too voluminous to search quickly, statistical models are constructed that are representative of the raw network usage data. These statistical models are stored, and may be subsequently analyzed for solving network usage problems. United States Patent Application Serial No. 09/548,124, has been previously incorporated herein by reference.

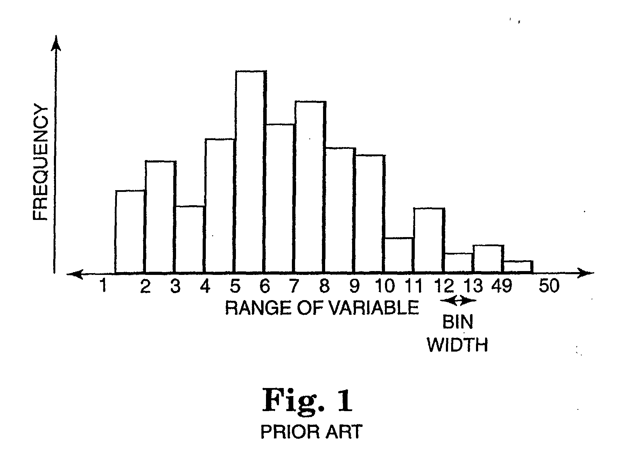

One of the most common methods for determining the probability density distribution of the values of a data variable is to use a conventional linear histogram as illustrated in Figure 1. Such a histogram must be established and several key parameters defined prior to the collection of any data. For example, the lower bound (*LB*) and upper bound (*UB*) of the anticipated values of the data variable must be defined and the number of bins, or equivalently, the width or size of the bins must be defined. All bins have the same size in a linear histogram. Populating the histogram consists of incrementing a counter associated with each bin, which represents the number of events that have occurred where the value of data variable is within the assigned range of a bin. Interestingly, although there are some heuristic algorithms for estimating the bin size published in the literature, it is still an area of active research. However, these heuristic algorithms assume prior knowledge of the value of *N*, which is the number of anticipated events to be recorded in the histogram. The conventional way of establishing these parameters is to store all the data and then perform a preliminary scan of all the data to establish the values *LB, UB,* and *N.* A histogram is then established with the appropriate *LB* and *UB* defined, and a bin size defined based on estimate heuristically derived from *N.* The raw data must then be scanned a second time to populate the histogram. As mentioned before, the mere storage of all this raw data is costly and creates large time latencies due to the large volume of events and high data rates. Without storage, none of these key parameters can be determined accurately, which limits the usefulness of a conventional linear histogram as a tool for real-time probability density distribution analysis of high-volume, streaming network usage data.

It is desirable to provide a system and method for real-time probability density distribution analysis of high-volume, streaming network usage data such as Internet usage data. Characteristics of this type of data include: the data needs to be continuously collected at very high data rates (e.g., 10,000 records/second); the data is too voluminous to economically store or, even if stored, the shear size of the data set would create long latencies in analyzing the data and producing results; neither the lower bound nor the upper bound of the incoming data is known; the number of incoming data events is not known; further, the values of incoming data are always positive and tend to range over many orders of magnitude and are very roughly 1/x distributed. This last characteristic is very common for network usage data: and is a reflection of the fact that there are typically only a small number of very large volume or "power" users on a network, and the number of users at a particular volume (x) of usage increases as the volume (x) decreases toward zero, roughly in proportion to 1/x. For reasons stated above and for other reasons presented in greater detail in the Description of the Preferred Embodiment section of the present specification, more advanced techniques are required in order to provide a real-time probability density distribution of high-volume, streaming network usage data having characteristics similar to Internet usage data.

The present invention is a network usage analysis system and method having dynamic statistical data distribution system and method. In one embodiment, the present invention provides a method for substantially real-time analyzing of a stream of data. The method includes receiving the stream of data. A data distribution is determined representative of the stream of data, including creating data bins having exponentially increasing sizes, and allocating a statistical representation of the data in the data bins. The statistical data distribution is used to analyze the stream of data.

Although the term network is specifically used throughout this application, the term network is defined to include the Internet and other network systems, including public and private networks that may or may not use the TCP/IP protocol suite for data transport. Examples include the Internet, Intranets, extranets, telephony networks, and other wire-line and wireless networks. Although the term Internet is specifically used throughout this application, the term Internet is an example of a network.

A number of preferred embodiments of the present invention will now be described with reference to the accompanying drawings, in which:-

Figure 1 is a diagram illustrating a linear histogram.
Figure 2 is a diagram illustrating one exemplary embodiment of a network usage analysis system having a dynamic statistical data distribution collection system, according to the present invention.
Figure 3 illustrates one exemplary embodiment of a graph showing a logarithmic histogram statistical model.
Figure 4 is a diagram illustrating one exemplary embodiment of a dynamic statistical data distribution collection system used in the network usage analysis system according to the present invention.
Figure 5 is a diagram illustrating one exemplary embodiment of an array structure used in ordering data bins as part of a dynamic statistical data distribution collection system according to the present invention.
Figure 6 is a block diagram illustrating one exemplary embodiment of a method of recording statistical data in an array structure used in a dynamic statistical data distribution collection system according to the present Invention.
Figure 7 is a diagram illustrating one exemplary embodiment of a tree structure used for recording statistical data in a dynamically statistical data distribution collection system according to the present invention.
Figure 8 is a block diagram illustrating one exemplary embodiment of a method of recording statistical data in a tree structure used in a dynamic statistical data distribution collection system according to the present invention.

In the following detailed description of the preferred embodiments, reference is made to the accompanying drawings that form a part hereof and show, by way of illustration, specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

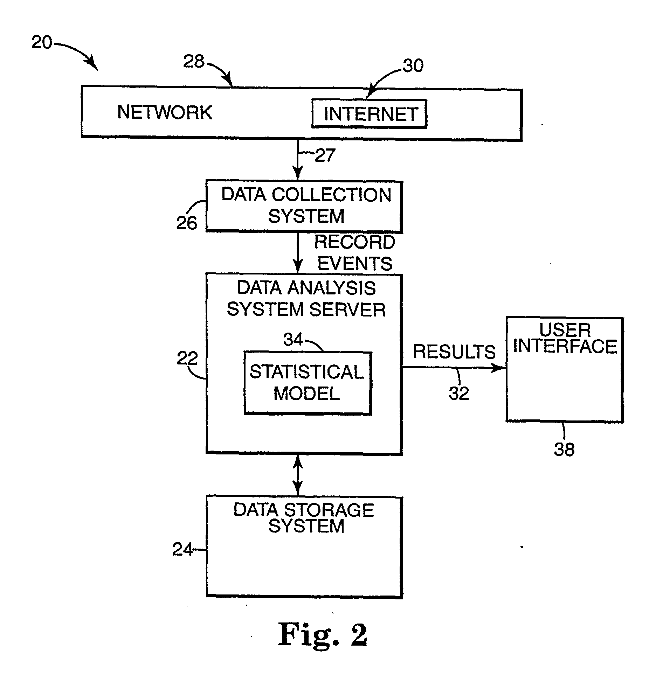

A network usage analysis system according to the present invention is illustrated generally at 20 in Figure 2. Network usage analysis system 20 provides a dynamically adaptive statistical data distribution collection system and method. In one aspect, raw usage data is collected and organized as statistical data in the form of a dynamically adaptive, logarithmic histogram. As usage data is collected and analyzed, corresponding statistical data is stored in the form of a number of "groups" or "bins". The bins have exponentially increasing sizes determined by a system and method described herein. The present invention provides for the bins to be created on an as needed basis ("on-the-fly") based on the values of the incoming usage data. The resulting histogram (which may be stored in the form of a table in memory) is used for subsequent network usage analysis, such as the computation of a probability density distribution corresponding to the histogram.

Conventional linear histograms utilize bins wherein each bin has the same width. Although a conventional histogram is useful for many applications, it is desirable to provide a system and method for real-time estimation of the probability distribution of a continuous stream of data, such as Internet usage data. Characteristics of this type of data include: the data needs to be continuously collected at very high data rates (e.g., 10,000 records/second); the data is too voluminous to economically store or, even if stored, the shear size of the data set would create long latencies in analyzing the data and producing results; neither the lower bound nor the upper bound of the incoming data is known; the number of incoming data events is not known; further, the values of incoming data are always positive and tend to range over many orders of magnitude and are very roughly 1/x distributed.

Conventional linear histograms utilize uniformly spaced intervals or bin widths for bins, which creates difficulties in creating a statistical distribution from the raw Internet usage data due to the above listed characteristics. As such, in a method using a conventional histogram the data must be scanned twice in order to determine the lower bound and the upper bound associated with the data values. This requires the raw usage data to be stored, at an additional cost, and unwanted latency. Further, the conventional heuristic algorithms for determining the width of each bin (or number of intervals) require a good estimate of the number of the events to be measured. The dynamically adaptive statistical data distribution collection system and method according to the present invention solves the problems associated with using conventional histogram statistical models with the collection and analysis of data types having characteristics similar to Internet usage data (e.g., problems such as storing voluminous data, scanning data twice).

Network usage analysis system 20 includes several main components, each of which is a software program. The main software program components of network usage analysis system 20 run on one or more computer server systems. In one embodiment, each of the main software program components runs on its own computer system.

One network usage analysis system suitable for use with the present invention is disclosed in U.S. Patent Application Serial No.09/548,124, filed April 12, 2000, entitled "Internet Usage Analysis System and Method," having a common assignee and inventor as the present application, which has been previously incorporated herein by reference.

In one exemplary embodiment, network usage analysis system 20 includes a data analysis system server 22 and a data storage system 24. Data analysis system server 22 receives usage data or "record events" from data collection system 26. Data collection system 26 receives network usage data from network 28. In one preferred embodiment, network 28 includes the Internet 30. Typically, the usage data is a real-time stream of network usage data records or record events. In one embodiment, the usage data is a real-time stream of record events generated from the data collection system 26 positioned on network 28.

Data analysis system server 22 receives the usage data in the form of record events from data collection system 26 via communication link 27. In one aspect, the usage data collection system 26 is separate from a network usage data mediation system, and in another aspect, the usage data collecting system 26 includes a network usage data mediation system. In another aspect, data collection system 26 is part of the data analysis system server 22. One data collection system suitable for use with the present invention is commercially available under the trade name INTERNET USAGE MANAGER, from Hewlett-Packard, U.S.A. Other data collection and mediation systems suitable for use with the usage analysis system in accordance with the present invention will become apparent to those skilled in the art after reading the present application.

Data analysis system server 22 uses the usage data to perform predetermined network usage statistical analysis. In particular, the stream of data is received. A data distribution representative of the stream of data is determined, including creating data bins having exponentially increasing sizes. A statistical representation of the data is recorded in the data bins. The data distribution is used to analyze the stream of data. The data analysis system server 22 operates to store the statistical data in data storage system 24. This statistical data is significantly smaller in size than the incoming raw data, so the storage requirements are quite modest. In one aspect, the data analysis system server 22 is responsive to a user interface 38 for interactive analysis of the statistical model 34. Further, a real-time graphical representation of the statistical model 34 can be output to a display system at user interface 38.

In one exemplary embodiment, data analysis system server 22 comprises a computer software program that runs on one or more computers or servers. Statistical model 34 can be stored as statistical data in the form of a table in data storage system 24. Data storage system 24 may comprise volatile memory (e.g., random access memory (RAM)) and/or non-volatile memory (e.g., a hard disk drive or other persistent storage device). User interface 38 may comprise a keyboard and/or mouse or other interface device with a display system such as a video display device as known in the art.

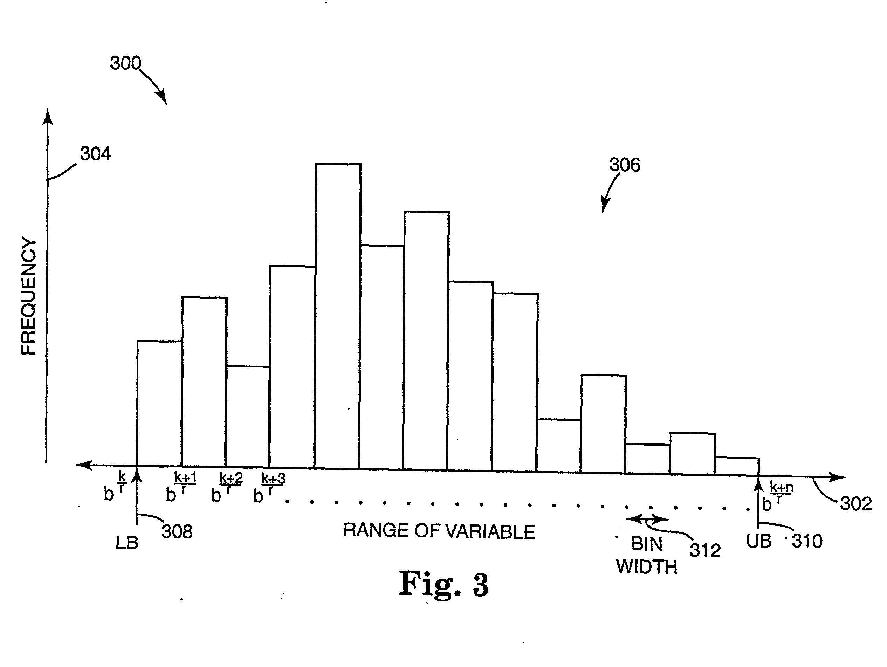

Figure 3 is a diagram illustrating one exemplary embodiment of a logarithmic histogram statistical model 34 generated using the network usage analysis system 20 having a dynamic adaptive statistical distribution collection system according to the present invention. The x-axis 302 illustrates the range of values proportional to the logarithm of a variable such as network usage in megabytes, and the y-axis 304 illustrates the frequency or number of events recorded within each bin. As usage data is collected and analyzed, corresponding statistical data is stored in the form of a number of "groups" or "bins", indicated at 306. The bins are created "as needed", as explained later. Each bin has a width, indicated at 312, having exponentially increasing sizes, indicated by bin boundaries $b^{\frac{k}{r}}$ $b^{\frac{k?1}{r}}$ $b^{\frac{k?2}{r}}$ $b^{\frac{k?3}{r}}$ $b^{\frac{k?n}{r}}$ as indicated (where b is the logarithmic base (e.g., b = 10 for base 10), k is the key and r is the resolution factor, as discussed in detail in this application). As usage data is collected, the data itself is not collected in each bin 306, but rather the frequency or number of events associated with the variable range 302 for each bin 306 is tabulated. The resulting histogram statistical model (which may be stored in the form of a table in memory) is used for subsequent network usage analysis, such as the computation of a probability density corresponding to the histogram 300. The present invention provides for a system and method of dynamically creating the bins for storing statistical data on an as needed basis, suitable for use with data having characteristics similar to those described earlier.

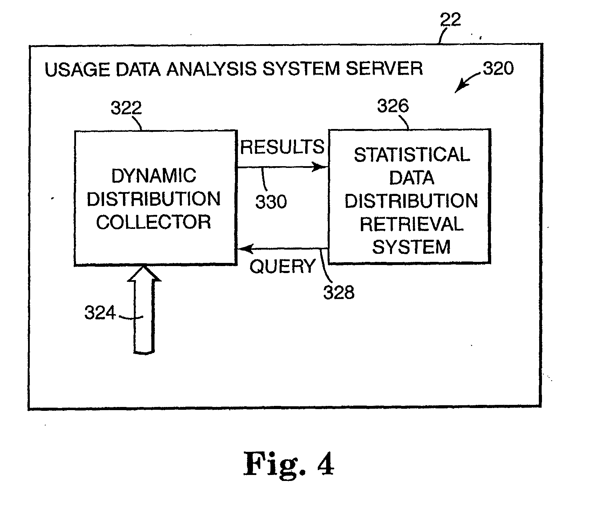

Figure 4 is a diagram illustrating one exemplary embodiment of a dynamically adaptive statistical data distribution collection system according to the present invention which is illustrated generally at 320. The dynamic statistical data distribution collection system 320 can be used as part of the network usage analysis system as previously described herein, and may be located within a usage data analysis system controller or server, such as data analysis system server 22 previously described herein. The dynamic statistical data distribution collection system takes advantage of data types having characteristics similar to Internet usage data, as described earlier.

The dynamic statistical data distribution collection system 320 includes a dynamic distribution collector 322. The dynamic distribution collector 322 receives or retrieves a substantially continuous stream of Internet usage data, indicated at 324. In one aspect, retrieving the stream of usage data may include querying a usage data source and collecting the stream of usage data from the usage data source in response to the query. In another aspect, the dynamic distribution collector could be passive data collector where data is "pushed" into it. In one aspect, the system includes a statistical data distribution retrieval system 326. The statistical data distribution retrieval system operates to query the dynamic distribution collector 322 for usage data statistics, indicated at 328. In response, the dynamic distribution collector 322 provides an output of a statistical data distribution array representative of the usage data 324, with minimal latency. The dynamic distribution collector 322 receives the stream of usage data 324 and determines a statistical data distribution representative of the stream of data, including creating data bins (e.g., as in a histogram statistical model) having exponentially increasing sizes, and recording the usage data as events to the appropriate data bins. Creating data bins having exponentially increasing sizes includes determining a set of logarithmic keys and indexing the usage data bins via these keys.

In particular, in order to create or define bins 306 having exponentially increasing sizes, a bin key $k$ is computed using the following formula:

$$\text{Bin Key} \qquad k = \left\lfloor r \log_b(v) \right\rfloor = \left\lfloor \frac{r \ln(v)}{\ln(b)} \right\rfloor = \text{(int) floor} \left[ \frac{r \ln(v)}{\ln(b)} \right]$$

*where*

$v$ = value of the input usage variable.
$r$ = resolution factor, typically an integer.
$b$ = base of the logarithm function applied to $v$, typically 10. (int) converts the value produced by the floor function, which is often a floating point value type, into an integer, which can be positive or negative.

The resolution factor $r$ is defined as the number of bins desired per order of magnitude, and is pre-selected or predetermined by the user. The above formula results in creating bins with exponentially increasing sizes. The resolution factor $r$ can be viewed as a transformation of the problem of not knowing the values of *LB*, *UB,* and *N* (or the bin size), into a different variable, which is much easier to approximate or choose prior to collecting any data. The user chooses a value $r$ based on the desired relative accuracy of the binning process, thus the name resolution factor. To illustrate this point, the above Bin Key equation produces a key value, $k$, which is a unique identifier for a particular bin. For any bin computed in this way, the ratio of the upper limit of a bin to the lower limit of that same bin is a constant for all bins produced with the same value of $r$.

$$\text{The ratio } \frac{\text{upper limit of bin } k}{\text{lower limit of bin } k} = 10^{\frac{1}{r}}$$

As an example if *r=24*, this ratio is ~1.10. This means that the upper limit of a bin is about 5% higher than the center of that same bin, and the lower limit of that bin is about 5% lower than the center of that same bin. For *r=13*, the relative accuracy of the binning process is about +/- 10%.

When all bins are present in a range, which is not required by the present invention, the boundaries of the bins form a power sequence as follows:

Let k range from - *m* to *n,* and *b*=10:

$$10^{\frac{-m}{r}}, 10^{\frac{-m-1}{r}}, \quad , 10^{\frac{-1}{r}}, 1, 10^{\frac{1}{r}}, 10^{\frac{2}{r}}, \quad , 10^{\frac{n}{r}}$$

,

This sequence has the desirable property that the boundaries where the ratio *k/r* is a whole number fall exactly on the integer powers of the base chosen, such as .01, 0.1, 1, 10, 100, etc.

The bins are stored in memory and available for use in further network usage analysis (as previously described herein). As an example, the frequency may be stored by adding a value of one corresponding to an event which falls in a corresponding bin. In another example, instead of storing hits (incrementing by one) the summation or total usage could be tracked and stored in the bin.

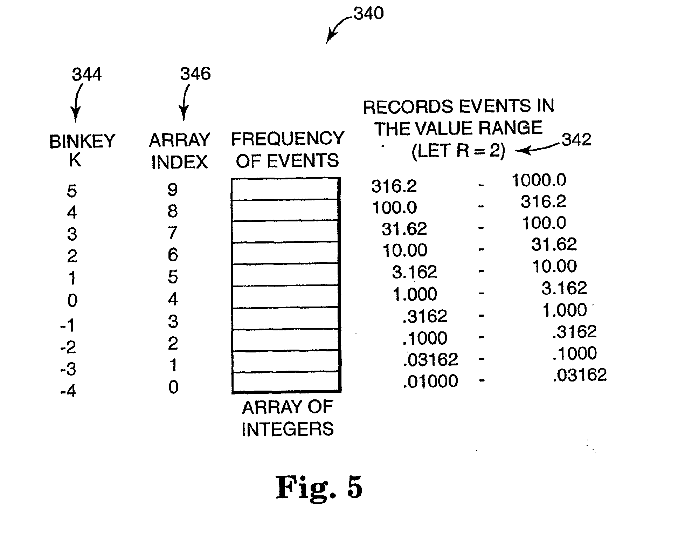

Figure 5 is a diagram illustrating one exemplary embodiment of an array structure used for logging and storing statistical data determined using the dynamically adaptive statistical data distribution collection system 320 according to the present invention. An array structure is illustrated generally at 340. In particular, for the exemplary embodiment shown, a resolution factor r equal to 2 is selected. A bin key k is determined, indicated at 344. The bin key k 344 corresponds to an array index 346 associated with the array 340. The array 340 is used to record statistical data representative of the collected data (e.g., the frequency of events). In the exemplary embodiment shown, the array is used to record the number of events falling within the determined ranges. The array 340 is stored as a set of contiguous values in memory.

As shown, the array index 0 records events in the value range .01000 to .03162; array index 1 corresponds to the recording of events in the value range .03162 to .1000; array index 2 records events in the value range between .1000 to .3162; array index 3 records events in the value range between .3162 to 1.000; array index 4 records events in the value range between 1.000 to 3.162; array index 5 records events in the value range 3.162 to 10.00; array index 6 records events in the value range between 10.00 to 31.62; array index 7 records events in the value range 31.62 to 100.0; array index 8 records events in the value range between 100.0 to 316.2; and array index 9 records events in the value range between 316.2 and 1000.0.

In the method of using logarithmic bin indexing according to the present invention, the resolution factor r determines the number of bin intervals per order of magnitude. The resulting quantization error is a constant relative to the absolute magnitude of the values statistically represented in a bin. This method results in many advantages. The bin key k can be computed quickly using the Bin Key equation above. Where $k/r$ is an integer, the lower boundary of the bin computed using this equation is an integer power of the chosen base.

The use of an array structure results in a very fast computation or determination of the proper data bin for each statistical data event. This results in a simple and fast creation of ordered output results. In one aspect, space for storage of the array 340 is pre-allocated in memory in chunks. In another aspect, storage space for the array 340 can be dynamically allocated in memory, based on the values of the record events. The memory space is dynamically allocated using a resizing operation after it is determined that a bin or location within the array 340 does not exist for a particular value of a recorded event.

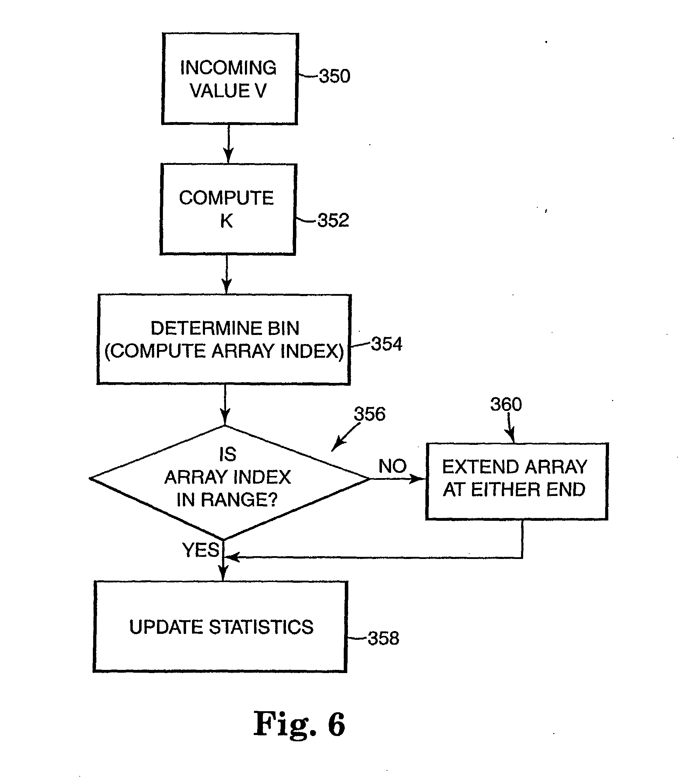

Figure 6 is a diagram illustrating one exemplary embodiment of a method of recording or distributing statistical data in an array structure according to the present invention. The value $v$ of an incoming data event from a stream of usage data is represented at 350. At 352, the bin key k is computed using the value v and desired resolution factor (e. g., r=2). At 354, the array index is determined, and as such the corresponding bin within the array is also determined. At 356, it is determined whether the array index computed at step 354 is within the existing array index range. If the computed array index value is within the array index range the statistics for the corresponding bin are updated to reflect the incoming value v, indicated at 358. If the array index value computed in step 354 is out of the range of the array index values, the size of the array is extended dynamically to accommodate the new input data value. In one aspect, the array is extended in memory in increments of $r$ bins (e.g., r=2) at either end of the array, indicated at 360. Once the array has been extended to include the computed array index value, the statistics are updated as indicated at 358.

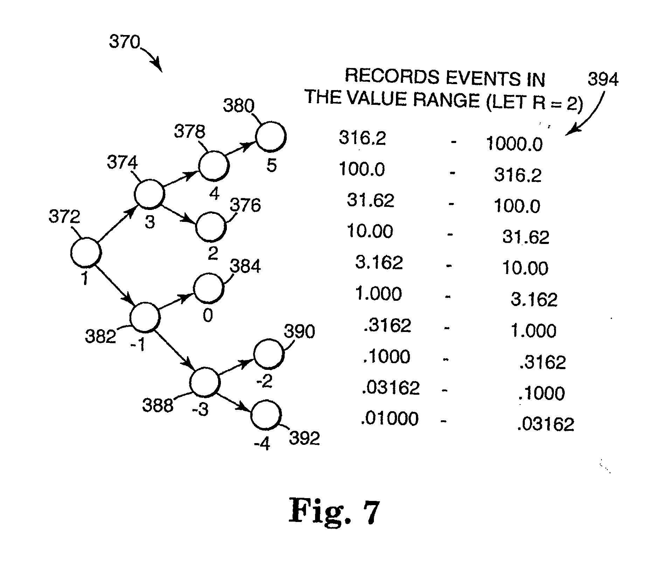

In another embodiment, a "tree" structure is utilized for storing the statistical data representative of the incoming data events in the determined bins in memory. Figure 7 is a diagram illustrating one exemplary embodiment of a tree structure for recording statistical usage events in memory using the system according to the present invention. The tree structure is generally illustrated at 370. One advantage of utilizing a tree structure to achieve bin ordering is that the method is totally independent of prior knowledge of the lower bound or the upper bound of the incoming values of data. Memory is allocated only as needed per bin. Optionally, once the tree structure reaches a predefined maximum size, merging of adjacent bins is very simple, and thus it provides the ability to place limits on the amount of memory used or size of the structure. The input recording of events may be slower than using an array structure, since the tree structure is constructed as the recorded events are received. However, when all required bins are present, no more bin creation is required and the recording of events is quite fast.

Tree structure 370 includes a number of nodes representative of each data bin, indicated as nodes 372, 374, 376, 378, 380, 382, 384, 388, 390 and 392. Each node is used as a container or bin for the recorded statistics, Again, as an example, for a resolution factor of r=2, the value range for the record events are determined and indicated at 394. A bin key k value is associated with each node, shown below each node, in the tree structure 370. The tree structure 370 is created as the input data event values are received.

In the exemplary embodiment illustrated by tree structure 370, a data event value of 5 falls within the value range 3.162 to 10, and as such a bin is represented at node 372, with a key value of 1.. If the next record event value is 50, and if a bin for that value does not exist, a bin is created at node 374, with a key value of 3 since the value 50 falls within the range between 31.62 to 100.0 megabytes. The tree structure 370 continues to be constructed in this manner. As such, some of the nodes (bins) may never need to be created if a data event value never falls within the bin range associated with the node.

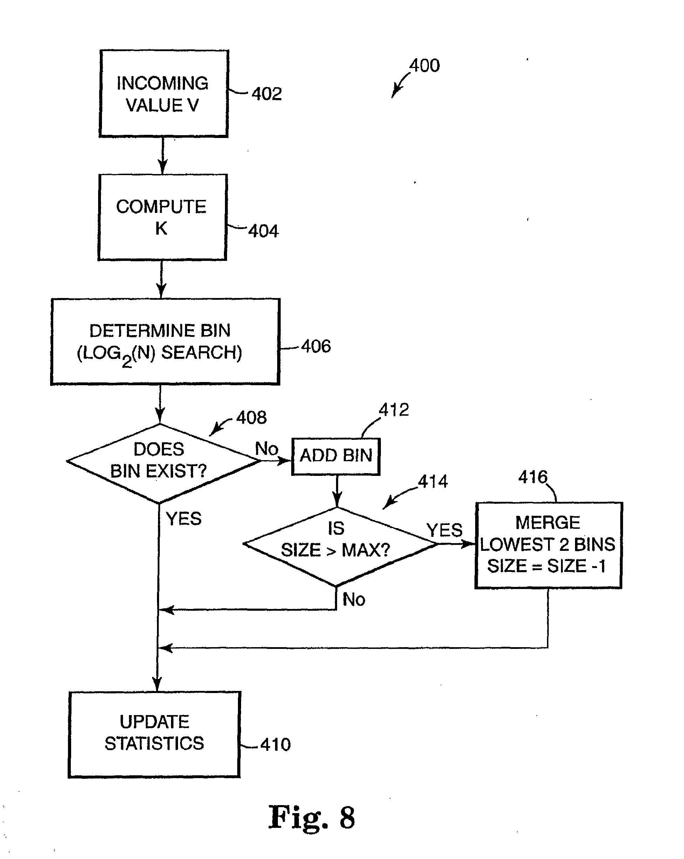

Figure 8 is a diagram illustrating one exemplary embodiment of a method of recording usage data events in a tree structure according to the present invention. The method is shown generally at 400. At 402, the incoming value v of the record event is received. At 404, the bin key *k* is computed from the data event value. The bin associated with the bin key k is located at 406. At 408, if the bin exists, the statistics are updated at the bin, indicated at 410. If a bin or node does not exist that corresponds to the computed bin key k, a bin is added to the tree structure indicated at 412. A maximum size for the tree structure may be optionally predefined. At 414, if the size of the tree structure as a result of adding the bin or node is not greater than the predetermined maximum size the statistics are updated at that node. At 414, if the size of the tree structure is greater than the predetermined maximum size optionally, the statistics of the lowest two bins or nodes are merged into a single node, indicated at 416. For example, in collecting statistical data related to Internet usage, it may be desired to merge the lowest two bins since they carry the least value (i.e., less importance).

Although specific embodiments have been illustrated and described herein for purposes of description of the preferred embodiment, it will be appreciated by those of ordinary skill in the art that a wide variety of alternate and/or equivalent implementations may be substituted for the specific embodiments shown and described without departing from the scope of the present invention. Those with skill in the chemical, mechanical, electro-mechanical, electrical, statistical, and computer arts will readily appreciate that the present invention may be implemented in a very wide variety of embodiments. This application is intended to cover any adaptations or variations of the preferred embodiments discussed herein. Therefore, it is manifestly intended that this invention be limited only by the claims and the equivalents thereof.

## Claims

1. A method for substantially real-time analyzing of a stream of data (20, 22) comprising:

   receiving the stream of data (27, 324);
   determining a data distributing representative of the stream of data (300), including creating data bins having exponentially increasing sizes (312); and

   allocating a statistical representative of the data in the data bins (340, 370); and using the data distribution to analyze the stream of data.

2. A method as claimed in claim 1, wherein creating data bins having exponentially increasing sizes includes indexing the bins using a set of keys (344) determined from a function of the logarithm of the incoming data, and determining a set of exponentially increasing intervals to define the data bin sizes (342, 394).

3. A method as claimed in claim 2, wherein determining the set of keys includes defining a resolution factor as a number of data bins desired per power of the chosen logarithm base; and using the resolution factor to determine the set of exponentially increasing intervals (342, 394).

4. A method as claimed in any preceding claim, wherein receiving the stream of data includes querying a data source and collecting the stream of data from the data source in response to the query (324).

5. A method as claimed in any preceding claim, comprising defining the data stream (324) as a continuous stream of data having a high data rate, as having only positive values, and as having an unknown lower value and an unknown upper value.

6. A method as claimed in any preceding claim, comprising defining a bin order, storing the bin order in memory, and defining the bin order as an array structure (340, 370); and storing the data bins in the array structure in memory, and wherein allocating the data value in the data bins includes receiving a data value; computing a bin index associated with the data value (344); defining an array index (346) having an array of index values wherein each array index value is associated with a data bin; and determining the data bin associated with the data value using the array index and bin index.

7. A method as claimed in claim 6, further comprising updating the value stored in the data bin (340).

8. A method as claimed in claim 6 or 7, wherein if a data bin cannot be determined, extending the array structure to accommodate the data value (400).

9. A method as claimed in any of claims 6 to 8, further comprising defining the array structure as a tree array structure (370), wherein allocating a data value in the tree array structure includes determining a data bin for the data value, and if a data bin does not exist, creating a data bin (400).

10. A system for analyzing a stream of data (20) for performing a method as claimed in any preceding claim comprising:

a dynamic distribution collector (322) configured for receiving the stream of data and determining the data distribution representative of the stream data, including creating data bins having exponentially increasing sizes, and allocating a statistical representation of the data in the data bins.

**Fig. 1**
PRIOR ART

Fig. 2

NETWORK

28

30

INTERNET

27

20

26

DATA COLLECTION SYSTEM

RECORD EVENTS

22

DATA ANALYSIS SYSTEM SERVER

34

STATISTICAL MODEL

RESULTS

32

USER INTERFACE

38

24

DATA STORAGE SYSTEM

**Fig. 3**

USAGE DATA ANALYSIS SYSTEM SERVER

22

320

322

326

DYNAMIC DISTRIBUTION COLLECTOR

RESULTS

STATISTICAL DATA DISTRIBUTION RETRIEVAL SYSTEM

330

QUERY

328

324

Fig. 4

340

| BINKEY<br>K | ARRAY<br>INDEX | FREQUENCY<br>OF EVENTS | RECORDS EVENTS IN<br>THE VALUE RANGE<br>(LET R = 2) |
|---|---|---|---|
| 344 | 346 | | 342 |
| 5 | 9 | | 316.2 - 1000.0 |
| 4 | 8 | | 100.0 - 316.2 |
| 3 | 7 | | 31.62 - 100.0 |
| 2 | 6 | | 10.00 - 31.62 |
| 1 | 5 | | 3.162 - 10.00 |
| 0 | 4 | | 1.000 - 3.162 |
| -1 | 3 | | .3162 - 1.000 |
| -2 | 2 | | .1000 - .3162 |
| -3 | 1 | | .03162 - .1000 |
| -4 | 0 | | .01000 - .03162 |

ARRAY OF
INTEGERS

# Fig. 5

**Fig. 6**

370

380

378

374

372

3

1

382 -1

388 -3

376

384

390

392

5

4

2

0

-2

-4

RECORDS EVENTS IN THE VALUE RANGE (LET R = 2)    394

| | | |
|---|---|---|
| 316.2 | - | 1000.0 |
| 100.0 | - | 316.2 |
| 31.62 | - | 100.0 |
| 10.00 | - | 31.62 |
| 3.162 | - | 10.00 |
| 1.000 | - | 3.162 |
| .3162 | - | 1.000 |
| .1000 | - | .3162 |
| .03162 | - | .1000 |
| .01000 | - | .03162 |

# Fig. 7

400

INCOMING
VALUE V  —402

COMPUTE
K  —404

DETERMINE BIN
($LOG_2(N)$ SEARCH)  —406

408
DOES
BIN EXIST?  →No→  ADD BIN  412

YES

IS
SIZE > MAX?  →YES→  MERGE
LOWEST 2 BINS
SIZE = SIZE -1  416

414

No

UPDATE
STATISTICS  —410

Fig. 8

European Patent Office

## EUROPEAN SEARCH REPORT

Application Number

EP 02 25 5296

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HEWLETT-PACKARD: "hp dynamic netvalue analyzer 1.0 - an hp netaction product" HP - INVENT, [Online] May 2001 (2001-05), XP002219757 Retrieved from the Internet: <URL:http://www.hp.com.au/malaysia/voip/08.pdf> [retrieved on 2002-10-31] * the whole document * | 1-10 | H04L12/26 H04L12/24 |
| X | JUDGE J ET AL: "SAMPLING HTTP RESPONSE PACKETS FOR PREDICTION OF WEB TRAFFIC VOLUME STATISTICS" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY: IEEE, US, vol. 5, 1998, pages 2617-2622, XP000801522 ISBN: 0-7803-4985-7 | 1,10 | |
| A | * page 2618, right-hand column, paragraph 2; figures 3,6 * | 2-9 | TECHNICAL FIELDS SEARCHED (Int.Cl.7) H04L |
| A | HEWLETT-PACKARD: "hp internet usage manager 3.1 - an hp netaction product" HP - INVENT, [Online] May 2001 (2001-05), pages 1-4, XP002219758 Retrieved from the Internet: <URL:http://www.hp.com/communications/usage/infolibrary/prodinfo/ium_product_brief_31.pdf> [retrieved on 2002-10-29] * the whole document * | 1-10 | |

-/--

The present search report has been drawn up for all claims

| Place of search | Date of completion of the search | Examiner |
|---|---|---|
| MUNICH | 7 November 2002 | Buhleier, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 25 5296

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SEQUEL: "Sequel's new RAS reporting delivers immediate ROI from ISP service" SEQUEL PRESS RELEASE, [Online] 26 May 1999 (1999-05-26), XP002219759 Retrieved from the Internet: <URL:http://www.sequeltech.com/news/pr8.htm> [retrieved on 2002-10-30] * the whole document * | 1-10 | |
| A | MARSHALL W T ET AL: "STATISTICS OF MIXED DATA TRAFFIC ON A LOCAL AREA NETWORK" COMPUTER NETWORKS AND ISDN SYSTEMS, NORTH HOLLAND PUBLISHING. AMSTERDAM, NL, vol. 10, no. 3/4, October 1985 (1985-10), pages 185-194, XP000811920 ISSN: 0169-7552 * page 188, left-hand column, paragraph 2 - paragraph 4; figures 4,6-9 * | 1-10 | |
| A | BRADFORD L BARRETT: "The Webalizer" README FAQ, December 1997 (1997-12), pages 1-25, XP002213789 * page 1, line 1 - page 3, paragraph 4 * "Output Produced" | 1-10 | TECHNICAL FIELDS SEARCHED (Int.Cl.7) |

The present search report has been drawn up for all claims

| Place of search | Date of completion of the search | Examiner |
|---|---|---|
| MUNICH | 7 November 2002 | Buhleier, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)